Europäisches Patentamt

(19) European Patent Office

Office européen des brevets

(11) Publication number: **0 242 156**
**B1**

(12) **EUROPEAN PATENT SPECIFICATION**

(45) Date of publication of the patent specification:
13.06.90

(51) Int. Cl.⁵: **E21D 11/15, F16L 9/22**

(21) Application number: 87303200.7

(22) Date of filing: 13.04.87

(54) Improvements in or relating to tunnel lining segments and tunnel linings formed therefrom.

(30) Priority: 14.04.86 GB 8609065

(43) Date of publication of application:
21.10.87 Bulletin 87/43

(45) Publication of the grant of the patent:
13.06.90 Bulletin 90/24

(84) Designated Contracting States:
DE FR GB IT

(56) References cited:
DE-A- 2 407 102
FR-A- 1 292 256
FR-A- 2 053 801

(73) Proprietor: Stanton PLC, Stanton-by-Dale Ilkeston
Derbyshire(GB)

(72) Inventor: Curtis, David John, 41 Pine Avenue, West
Wickham Kent(GB)
Inventor: Greatorex, Cyril Barrie, 83 Kennedy Drive
Stapleford, Nottingham Nottinghamshire(GB)

(74) Representative: Heath, Peter William Murray, FRY
HEATH & CO. St. Georges House 6 Yattendon Road,
Horley Surrey RH6 7BS(GB)

# Description

This invention relates to tunnel lining segments and tunnel linings formed therefrom.

It is known to produce cast-iron tunnel segments connected together by bolted flanged joints. Such segments are usually connected together to form a ring which is then connected to successive rings within the bored or cut tunnel below ground, for example. Such segments are usually in the form of generally rectangular members having walls or edges arranged to face axially of the tunnel lining to be formed and walls or edges arranged to face circumferentially of the lining to be formed. For interconnection of the segments, flanges are usually provided at all four sides, extending inwardly of each segment.

The circumferentially facing edges and flanges which are interconnected by means of nuts and bolts (for example) to form the complete rings of the lining, are required to transmit the hoop compressive thrust exerted by the surrounding ground and to transmit the bending moments induced by differential ground movements. The outer faces of the circumferentially facing flanges are usually machined flat to extend radially of the lining ring and provide a large bearing area covering (at least) most of the flange face. In order to cast mould the flanges without the use of expensive cores, it has hitherto been necessary for the flanges to be extravagantly thick (with respect to weight and cost) at their root connection with the inner side of the segment. In addition with such an arrangement it is necessary to provide a considerable amount of excess metal on the outward face of each of the flanges in order to ensure that segments can be machined to the precise required dimensions and angle.

FR-A 1 292 256 discloses a lining segment for mine shafts in which inwardly directed circumference facing flanges are provided, the flanges being inset from the circumferentially facing edges of the segment, the flanges being adapted to receive means for interconnecting the segment with other circumferentially adjacent segments.

DE-A 2 407 102 relates to a method of factory assembling tunnel lining panels from segments by means of a connecting material which fills gaps between the segments. Some of the embodiments illustrated show segments having inwardly directed circumference facing flanges inset from the circumferentially faces of the segments, the flanges being adapted to receive means for interconnecting the segment with other circumferentially adjacent segments.

FR-A 2 053 801 discloses a lining for tunnels etc. It is directed to a segment having an adjustable circumferential length. Segments are disclosed having circumference facing flanges inset from the circumferentially facing edges of the segments.

It is an object of the present invention to overcome or at least substantially reduced the above-mentioned disadvantages.

In accordance with the invention there is provided a cast-iron tunnel segment of generally rectangular configuration having two opposite edges arranged in use to face axially of the tunnel lining, and the alternate two opposite edges arranged in use to face circumferentially of the tunnel lining, the segment being curved in the circumferential direction concave inwardly; the circumferentially facing edges of the segment being provided with flanges disposed adjacent thereto, and adapted to receive means for interconnecting the segment with other circumferentially adjacent segments, the flanges being directed inwardly of the segment and each connecting with the inner side of the segment at a root inset from the circumferential edge of the segment; characterised by a plurality of inwardly directed ribs extending from the flanges to the adjacent circumferentially facing edges of the segment, the ribs being machined on their circumferentially facing edges to provide radially aligned surfaces adapted to engage with corresponding surfaces of circumferentially adjacent segments to form a lining ring, and strengthening rib continuations of said ribs extending between the flanges disposed adjacent the circumferentially facing edges of the segment.

The invention includes within its scope tunnel linings incorporating a segment as herein defined.

In order that the invention may be more readily understood, one embodiment thereof will now be described with reference to the accompanying drawings in which:

Fig. 1 is an axial end elevation of one form of prior art tunnel lining segment;
Fig. 2 is an axial end elevation of a tunnel lining segment in accordance with the invention;
Fig. 3 is a section on the line B–B of Fig. 2; and
Fig. 4 is a view on arrow A of Fig. 2.

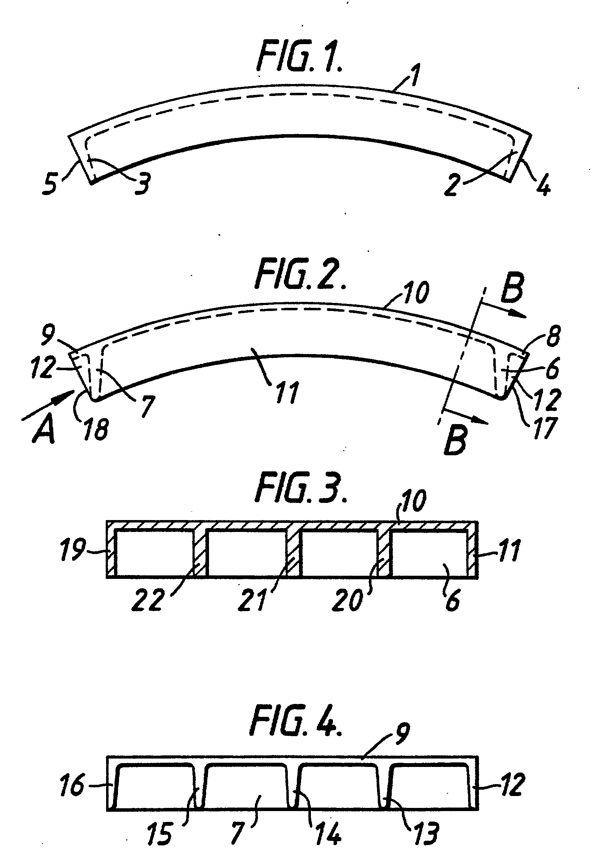

As can be seen from Fig. 1, the prior art cast-iron segment 1 illustrated has circumferentially facing inwardly directed flanges 2, 3 having outer faces 4, 5 machined flat and radially aligned to provide a large bearing area covering most of the flange face with respect to adjacent circumferential segments. As previously mentioned, such flanges require the use of expensive cores (as illustrated) or are extravagantly thick at their root connection with the segment, and additionally a considerable excess of iron must be provided on the outer flange faces 4 and 5 in order to ensure that the face can be machined for the required dimensions and curvature of the tunnel lining ring to be formed by connection of the segment to others.

In contrast as can be seen in Fig. 2, 3 and 4 corresponding flanges 6 and 7 of circumferentially facing edges 8 and 9 of a segment 10 according to the invention are set-back from the circumferentially facing edges 8 and 9 of the segment. The flanges need not be radially aligned, but can be set at a convenient disposition such as in the parallel arrangement illustrated.

The axial ends of the segment are provided with inwardly directed flanges 11 and 19 at right-angles to the main body of the segment, and inwardly directed strengthening ribs 20, 21 and 22 are also provided along the axial length of the segment. As seen clearly in Fig. 4 flanges 11 and 19 and ribs 20, 21 and 22 effectively extend through the circumferentially facing flanges into extension ribs 12, 13, 14, 15 and 16 which link the segment end to the flanges 6 and 7.

The ends 17, 18 of the extension ribs and the edges 8 and 9 are machined for accurate radial alignment and for engagement with corresponding extension rib and segment ends on circumferentially adjacent tunnel segments to provide the required curvature of the tunnel lining. Nuts and bolts (not shown) may be utilised through bores (not shown) in the flanges 6, 7 and 11 for interconnection of the segment with adjacent segments.

The just mentioned feature of abutment of the machined ends 17, 18 of the ribs and the edges 8 and 9 of segment 10 is of considerable importance, particularly the abutment of the ribs throughout their length, since in use bolts tightened between the flanges 6 and 7 of juxtaposed segments cause the flanges to act, in effect, as spring tensioning devices firmly holding together the totality of edges 17, 18 of the ribs and the edges 8 and 9 of segments 10, even under any bending stress due to distortion of the tunnel lining, for example, thereby providing a very firm positive connection between segments. It is to be noted that the abutment of the totality of ends and edges 17, 18 and 8, 9 most importantly enables uniform transmission of hoop thrust between segments when formed into the lining.

In contrast in connectors of the kind shown in Fig. 1 for example the connected flanges 2 and 3 of adjacent segments can, between the interconnecting bolts thereof, when subjected to bending stress for example, be susceptible to some separation due to a "hinge" effect of the flanges 2 and 3. Similarly a previous proposal for example, where the ends 17 and 18 of the ribs are largely concave along their length so that with connected segments, juxtaposed rib edges only meet at their tip and root, distortion of the ribs in question and their adjacent end flanges from the tension imposed by connecting bolts can occur, and more importantly, because of the significantly incomplete connection between the ends of abutting ribs, there is a detrimental lack of uniformity of transmission of hoop thrust therebetween.

The invention is additionally beneficial in numerous ways. Thus for example the area of metal requiring machining for the accurate alignment of adjacent segments around the ring of the liner is reduced and is confined to that which provides the useful function of transmitting the hoop compressive thrust via the ribs and axial end flanges. In addition the two set-back circumferentially facing flanges can, if disposed in a parallel arrangement as illustrated, simplify moulding by obviating the necessity for large cores and enabling the flange thickness to be reduced at the root.

The invention also improves the efficiency of the thrust transfer between segments and simplifies, lightens and cheapens the product. The invention is particularly beneficial when applied to linings made from a large number of relatively small segments such as can be manufactured economically on automated cast moulding machines.

## Claims

1. A cast-iron tunnel lining segment (10) of generally rectangular configuration having two opposite edges arranged in use to face axially of the tunnel lining, and the alternate two opposite edges (8, 9) arranged in use to face circumferentially of the tunnel lining, the segment being curved in the circumferential direction concave inwardly; the circumferentially facing edges of the segment being provided with flanges (6, 7) disposed adjacent thereto, and adapted to receive means for interconnecting the segment with other circumferentially adjacent segments, the flanges (6, 7) being directed inwardly of the segment and each connecting with the inner side of the segment at a root inset from the circumferential edge (8, 9) of the segment; the segment further comprising a plurality of inwardly directed ribs (12, 13, 14, 15, 16) and being characterized in that the circumferential ribs (12, 13, 14, 15, 16) extend (17, 18) through the longitudinal side flanges (6, 7) to the adjacent circumferentially facing edges (8, 9) of the segment (10), the ribs (12, 13, 14, 15, 16) being machined on their circumferentially facing edges to provide radially aligned surfaces adapted to engage with corresponding surfaces of circumferentially adjacent segments to form strengthening rib continuations (11, 20, 21, 22, 19) of said ribs extending between the flanges disposed adjacent the circumferentially facing edges of the segment.

2. A segment as claimed in claim 1 characterised in that the flanges (6, 7) disposed adjacent the circumferentially facing edges (8, 9) of the segment lie in generally parallel planes.

3. A segment as claimed in claim 2 characterised in that the dimension and curvature of the segment and the dimensions of the flanges (6, 7) are such that the machined circumferentially facing edges of the ribs (12, 13, 14, 15, 16) a taper to immediately adjacent the innermost ends of the flanges (6, 7).

4. A segment as claimed in claim 1 or 2 formed of spheroidal graphite iron.

5. A tunnel lining incorporating a segment as claimed in any one of the preceding claims.

## Patentansprüche

1. Ein gußeisernes Tunnelauskleidungssegment (10) allgemein rechteckiger Konfiguration, bei dem zwei gegenüberliegende Kanten im Einsatz axial zur Tunnelauskleidung gerichtet angeordnet sind und die beiden anderen gegenüberliegenden Kanten (8, 9) im Einsatz in Umfangsrichtung zur Tunnelauskleidung angeordnet sind, und das in Umfangsrichtung konkav nach innen gebogen ist und dessen in Umfangsrichtung gerichtete Kanten mit daran angrenzend angeordneten Flanschen (6, 7) versehen sind und zur Aufnahme von Mitteln zum Verbinden des Segments mit anderen in Umfangsrichtung anstoßenden Segmenten ausgelegt sind, wobei die Flansche (6, 7) vom Segment nach innen gerichtet sind und jeder Flansch mit der Segmentinnenseite auf einem Wurzeleinsatz von der Umfangskante (8, 9) des Segments aufsitzt, das darüberhinaus eine Vielzahl nach innen gerichteter Rippen (12, 13, 14, 15, 16) aufweist und dadurch gekennzeichnet ist, daß die Umfangsrippen (12, 13, 14, 15, 16) durch die längsseitigen Flansche (6, 7) bis zu den anstoßenden, in Umfangsrichtung weisenden Kanten (8, 9) des Segments (10) reichen (17, 18), wobei die Rippen (12, 13, 14, 15, 16) an ihren in Umfangsrichtung weisenden Kanten spanhebend bearbeitet sind, um radial ausgerichtete Flächen zu bieten, die zum Eingriff in entsprechende Flächen von in Umfangsrichtung. anstoßenden Segmenten angepaßt sind, um Verstärkungsrippenfortsätze (11, 20, 21, 22, 19) der besagten Rippen zu bilden, die bis zwischen die anstoßend an die in Umfangsrichtung weisenden Kanten des Segments angeordneten Flansche reichen.

2. Ein Segment gemäß Anspruch 1, das dadurch gekennzeichnet ist, daß die anstoßend an die in Umfangsrichtung weisenden Kanten (8, 9) des Segmentes angeordneten Flansche (6, 7) in allgemein parallelen Ebenen liegen.

3. Ein Segment gemäß Anspruch 2, das dadurch gekennzeichnet ist, daß die Größe und Biegung des Segments und die Abmessungen der Flansche (6, 7) so ausgelegt sind, daß sich die bearbeiteten in Umfangsrichtung weisenden Kanten der Rippen (12, 13, 14, 15, 16) bis unmittelbar anstoßend an die innersten Enden der Flansche (6, 7) verjüngen.

4. Ein aus Kugelgraphitguß geformtes Segment gemäß Anspruch 1 oder 2.

5. Eine Tunnelauskleidung mit einem Segment gemäß einem der vorgenannten Ansprüche.

**Revendications**

1. Un segment de revêtement de tunnel en fonte (1, 10), ayant en général une configuration rectangulaire, et dont les deux bords opposés sont agencés, lors de l'utilisation, de manière à faire face à l'axe du revêtement de tunnel, alors que les deux bords opposés alternants (8, 9) sont agencés, lors de l'utilisation, de manière à faire face à la circonférence du revêtement de tunnel, le segment étant incurvé dans un sens circonférentiel concave vers l'intérieur; sur les bords du segment faisant face à la circonférence, on a prévu des brides (6, 7), selon une disposition adjacente, qui sont adaptées de façon à pouvoir recevoir un dispositif permettant de relier le segment à d'autres segments contigus dans le plan de la circonférence, les brides (6, 7) étant dirigées vers l'intérieur du segment et chacune étant raccordée à la face interne du segment au niveau d'un emboîtement de talon du bord circonférentiel (8, 9) du segment; en outre, le segment comporte plusieurs nervures dirigées vers l'intérieur (12, 13, 14, 15, 16) qui se distinguent par le fait que les nervures circonférentielles (12, 13, 14, 15, 16) se prolongent (17, 18) par les brides latérales longitudinales (6, 7) sur les bords adjacents faisant face à la circonférence (8, 9) du segment (10) - les nervures (12, 13, 14, 15, 16) sont usinées sur leurs bords faisant face à la circonférence afin de constituer des surfaces alignées radialement et adaptées de manière à s'emboîter avec les surfaces correspondantes des segments adjacents dans le plan de la circonférence en vue de former un anneau; et des prolongements de renforcement (11, 20, 21, 22, 19) desdites nervures viennent se loger entre les brides disposées de façon adjacente aux bords du segment faisant face à la circonférence.

2. Un segment, selon les stipulations de la revendication 1, se caractérisant par le fait que les brides (6, 7) disposées de façon adjacente aux bords du segment faisant face à la circonférence (8, 9) se trouvent dans des plans généralement parallèles.

3. Un segment, selon les stipulations de la revendication 2, se caractérisant par le fait que la dimension et la courbure du segment ainsi que les tailles des brides (6, 7) sont telles que les bords usinés faisant face à la circonférence, au niveau des nervures (12, 13, 14, 15, 16) viennent abouter sur les extrémités les plus internes immédiatement adjacentes aux brides (6, 7).

4. Un segment, selon les stipulations de la revendication 1 ou 2, fabriqué en fonte nodulaire.

5. Un revêtement de tunnel comportant un segment conforme à l'une quelconque des revendications précédentes.

# FIG. 1.

1

5   3                               2   4

# FIG. 2.

10                                   B

9
12                                   8
                                     6
                11                   12
A   18      7                        17
                                     B

# FIG. 3.

                              10

19                                   11

22      21      20      6

# FIG. 4.

                              9

16                                   12

      15      7      14      13